# Europäisches Patentamt

**European Patent Office**

**Office européen des brevets**

(11) Publication number: **0 091 246**
**B1**

## EUROPEAN PATENT SPECIFICATION

(45) Date of publication of patent specification: **25.06.86**

(51) Int. Cl.⁴: **B 60 K 5/12, F 16 F 9/04**

(21) Application number: **83301682.7**

(22) Date of filing: **25.03.83**

(54) Vibration-absorbing mounting with fluid damping.

(30) Priority: **31.03.82 JP 47693/82 u**

(43) Date of publication of application:
**12.10.83 Bulletin 83/41**

(45) Publication of the grant of the patent:
**25.06.86 Bulletin 86/26**

(84) Designated Contracting States:
**DE FR GB**

(56) References cited:
EP-A-0 012 638
EP-A-0 072 262
DE-A-3 016 421
FR-A-2 468 794
GB-A-2 079 894
GB-A-2 086 530
US-A-2 387 066

PATENTS ABSTRACTS OF JAPAN, vol. 5, no. 6,
January 16, 1981, page M-50-678

(73) Proprietor: **THE TOYO RUBBER INDUSTRY CO. LTD.**
17-18, Edobori 1-chome
Nishi-ku Osaka (JP)

(73) Proprietor: **TOYOTA JIDOSHA KABUSHIKI KAISHA**
1, Toyota-cho Toyota-shi
Aichi-ken 471 (JP)

(72) Inventor: **Atsumi, Tomiaki**
12-9, Imacho 6-chome
Toyota-shi Aichi-ken (JP)
Inventor: **Nakakubo, Tamio**
185-43, Takabarisekobo Idakacho Meito-ku
Nagoya-shi (JP)
Inventor: **Kuse, Kazumasa**
38-1, Asahicho 6-chome
Toyota-shi Aichi-ken (JP)
Inventor: **Kunihiro, Motoo**
12-30, Shimochujocho
Ibaraki-shi Osaka-fu (JP)
Inventor: **Okamoto, Shuichi**
49-1-203, Kamihamacho 4-chome
Tsu-shi Mie-ken (JP)
Inventor: **Ishigaki, Masahiro**
29-24-306, Honmachi
Tsu-Shi Mie-Ken (JP)

Courier Press, Leamington Spa, England.

**0 091 246**

(74) Representative: **Luckhurst, Anthony Henry William et al**
**STANLEY, POPPLEWELL, POOLE 57 Lincoln's Inn Fields**
**London WC2A 3LS (GB)**

## Description

This invention relates to a vibration-absorbing mounting having dynamic spring characteristics due to compressive fluid such as air, and more particularly, to a vibration-absorbing mounting with fluid damping intended exlusively for installing in a slanted or non-horizontal orientation, which mounting has such an ideal spring characteristic that the dynamic spring rate in the high frequency region is small and the dynamic spring rate in the low frequency region is large, and is constructed to be robust and compact.

In resiliently supporting various oscillation-generating machines such as automobile engines, a resonance phenomenon occurs upon starting or stopping of the machines or owing to excitation caused because a frequency component is generated by the machines in the neighbourhood of the natural frequency of the support system. As a result, excessive vibrational amplitude can cause various troubles or problems.

In order to suppress resonance of this kind, rubber material has hitherto been used as a high damper material. However, rubber material has the defects or disadvantages that it exhibits a large creep or "permanent set" phenomenon and has a poor vibration insulation capacity against high frequency vibrations because of the increase in its modulus of elasticity.

Recently, in order to obviate such defects, the trend in vibration dampers or vibration insulators has been toward using an atmospheric suspension or air spring which avails itself of the dynamic spring rate inherent in air. In this case, a large-volume air chamber is required to carry a heavy load, thus leading to a large-size rubber mounting device. However, if the damping characteristics of the air spring in the high-amplitude low-frequency region are enhanced by increasing the damping coefficient due to air, then the dynamic spring rate due to air will be increased in proportion to the increase, which results in a decrease in vibration absorption capacity in the high frequency region. Conversely, if the vibration absorption performance in the high frequency region is enhanced, damping characteristics in the low frequency region are naturally decreased. In particular, where the air spring is used as a bearing device for an engine mounted in a car, the rotational speed of the engine varies over a wide range, so that many disadvantages and problems have been encountered.

US—A—2387066 describes a vibration-absorbing mounting which comprises a cup-shaped chamber containing a damping fluid. An upper wall of the chamber is formed by a resilient element which carries at its centre a load supporting member. The load supporting member extends within the chamber and is loosely coupled to an apertured diaphragm which divides the cup-shaped chamber. The damping fluid covers the diaphragm. Small movements of the load supporting member are absorbed by deformation of the resilient element, possibly with some transfer of fluid across the diaphragm. Large movements of the supporting member, such as caused by a sudden shock, cause the supporting member to engage with the diaphragm to move it, thus causing substantial transfer of the damping fluid across the diaphragm, the throttling action of fluid passing through the apertures providing a damping action.

Another known vibration-absorbing mounting which is capable of exhibiting satisfactory vibration absorption characteristics in both the high frequency region and the low frequency region is shown in Fig. 4. We have proposed a new vibration-absorbing mounting in this category.

The prior art mounting as shown in Fig. 4, is constructed so that a rubber generally cylindrical body 3 is interposed between an upper fitment 1 which forms an upper seat for fixing to an oscillation-generating machine such as an engine and a lower fitment 2 which forms a lower seat for fixing to a chassis or vehicle, the upper face and the lower face of the body 3 are coupled fluidtightly to the upper fitment 1 and the lower fitment 2, respectively, thus forming a fluid chamber 9 enclosed by the lower face of the rubber cylindrical body 3 and the lower fitment 2, which chamber is capable of changing in volume; and that a movable partition 4', which is bonded integrally through a shaft 5 entering fluid-tightly and vertically the rubber cylindrical body 3 to the upper fitment 1, is provided laterally within the fluid chamber 9 to divide it into an upper sub-chamber 9a and a lower sub-chamber 9b which communicate with each other through an orifice 10.

By that construction, the vibrations coming from the engine are transmitted to the rubber cylindrical body 3 causing volume change of the fluid chamber 9 and moving the movable partition 4' by way of the shaft 5, whereby the volume of one of the upper and lower sub-chambers (9a) (9b) is increased, and the volume of the other is decreased.

Thus, the foregoing mounting evidently has the advantage that damping capacity is exhibited by the throttling effect of a fluid passing through the orifice 10.

On the other hand, when supporting an automobile engine in a vibration-absorbing way, in order to support it while accommodating the vibrations of a rolling direction and lateral direction or vertical direction in a mutually coupling way, it is often necessary to mount the aforesaid vibration-absorbing mounting so that its supporting axis is not in the perpendicular or vertical direction.

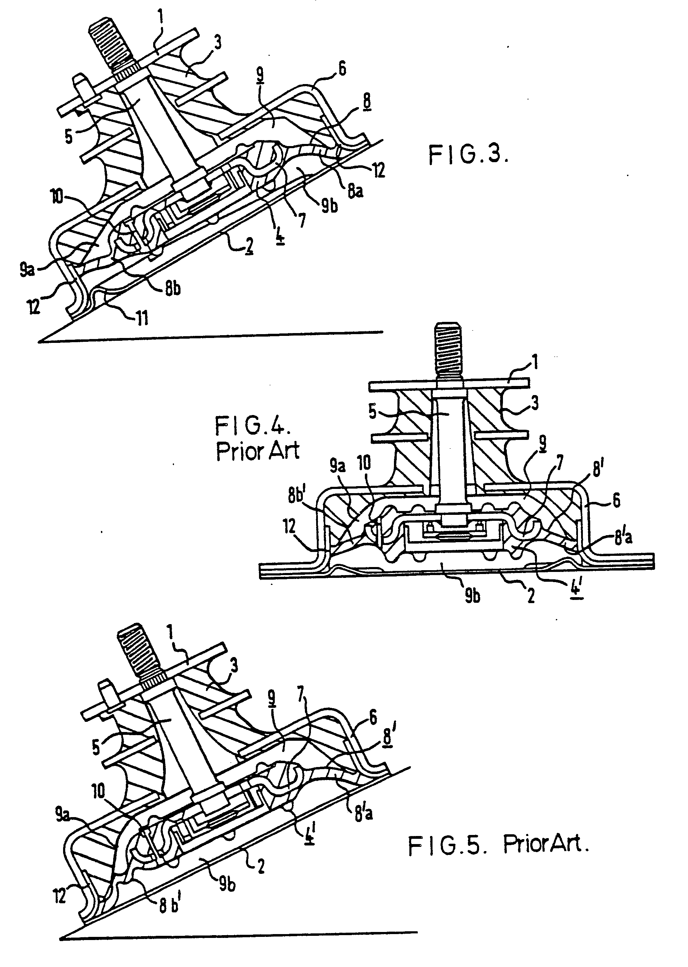

One example of such a supporting mode is shown in Fig. 5 in which the foregoing vibration-absorbing mounting M is mounted to assume such a slanted orientation that the support axis direction and the loading direction intersect at an acute angle. However, this vibration-absorbing mounting M for general use is designed from the premise that it is installed in the horizontal orientation in which the support axis direction and the load imposing direction are in accord with each other, and an elastic ring 8' of the movable partition 4' extending movably between the surrounding portion of the shaft 5 and an annular area of the lower fitment 2 adopts a shape having rotational symmetry around the shaft 5, substantially at right angles to it.

When the mounting thus constructed is installed in a slanted orientation and the elastic ring 8' is slanted, in the top portion 8a' of it stress due to a load acts as a force stretching it in an obliquely downward direction whereas in the bottom portion 8b', the stress acts as a force causing it to buckel. As a result, the top portion 8a' is little affected whereas the bottom portion 8b' is oscillated in a buckled state, so that breakage is liable to occur at the buckled position and not only is the vibration absorbing function lost, as expected, but also the life span is shortened, which requires repeated exchange of the unit for a new one. Thus, the prior art mounting is disadvantageous in respect of maintenance and cost.

In view of the present situation where the above problems have remained unsolved, this invention aims to provide a vibration absorbing mounting with fluid damping for use exclusively installed in a slanted orientation, which is capable of exhibiting a reliable vibration-absorbing performance over a long period of time. More particularly, this invention relates to an improvement in a movable partition member, including an elastic ring, for a mounting device of the above-described type by constructing it so that concentration of stress leading to buckling can be precluded.

According to the present invention, there is provided a vibration absorbing mounting with fluid damping, said mounting comprising first and second mounting members, a resiliently compressible body extending between the first and second mounting members to form a fluid chamber which is capable of changing volume, a shaft member fluid tightly connected to the upper member and extending therefrom into the chamber and generally axially of the chamber, a movable partition member coupled to the first member by means of the shaft member and arranged laterally within the fluid chamber to divide it into upper and lower sub-chambers, fluid being expelled from or admitted to each sub-chamber on volume changes of the sub-chambers via an orifice connecting the sub-chambers to each other or to the atmosphere, the movable partition member comprising an elastic ring extending between the shaft and an annular region of the second mounting member, characterised in that the mounting is for use in a slanted orientation such that the support axis direction and the loading direction intersect, and that the elastic ring is distorted such that a first portion, which is an upper portion when the device is in use, and a second portion, which is a lower portion when the device is in use, are deformed when mounted under a load, to be substantially horizontal and have substantially parallel profiles, that the first portion defines an angle to the shaft which is larger than the angle of the second portion in a no-load condition, and that the angle of an intermediate portion of the ring between the first and second portions varies gradually between the first and second portions.

The invention will be further described by way of example with reference to the accompanying drawings, in which:

Fig. 1 is an elevational view in section of an embodiment of the invention;

Fig. 2 is an underneath view of the mounting shown in Fig. 1;

Fig. 3 is a schematic elevational view in section of the mounting according to this invention installed for supporting in a vibration absorbing manner;

Fig. 4 is an elevational view in section of a prior art mounting; and

Fig. 5 is a schematic illustration of the mounting as shown in Fig. 4 showing a mounting state for the vibration-absorbing support.

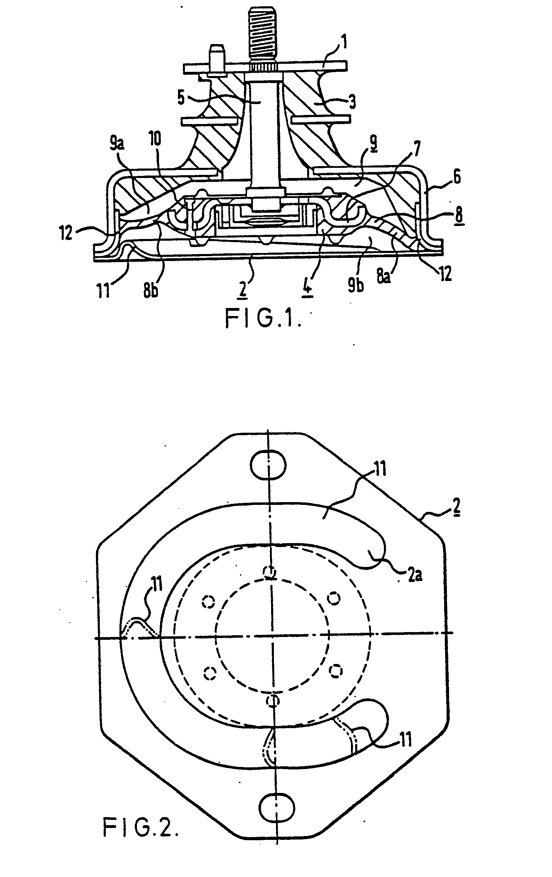

Referring to Fig. 1 and Fig. 2, the vibration absorbing mounting with fluid damping according to this invention is of a type using compressible fluid such as air, and comprises an upper. fitment 1, a lower fitment 2, a rubber cylindrical body 3 and a movable partition 4.

The upper fitment 1 is an upper seat for fixing to a vibration-absorbing machine, e.g. an engine and the lower fitment 2 is a lower seat for securing to a chassis e.g. of a vehicle, or *vice versa*.

The rubber cylindrical body 3 is, in Fig. 1, formed of an hourglass-shaped cylindrical body having a bore axially through the centre thereof for receiving a shaft 5 therein in a fluid tight fit, and is interposed between the upper and lower fitments 1, 2 with its upper face and its lower surrounding face bonded integrally and hermetically to the upper fitment 1 and the lower fitment 2, respectively. However, the shape of the rubber cylindrical body 3 is not limited to a cylinder shape, and may be an appropriate body of rotation such as a frusto-conical shape.

By the bonding, there is defined a void space enclosed between the lower or inner face of the rubber cylindrical body 3 and the lower fitment 2, the void space serving as an air chamber 9 for admitting compressive fluid which is capable of changing in volume.

The movable partition member 4 is made of a rubber and formed in an appropriate shape. It is bonded integrally to the upper fitment 1 through the shaft 5, which enters vertically and airtightly the rubber cylindrical body 3, and is provided horizontally within the air chamber 9 to divide it into upper sub-chamber 9a and lower sub-chamber 9b.

Upon mould shaping, the rubber cylindrical body 3 and the movable partition 4 are joined and attached to rigid annular bodies 6, 12 for bonding integrally to the lower fitment 2 at their respective perimeters. The movable partition 4 is further rigid and fast with a rigid plate 7 to increase mechanical securement to the shaft 5.

The upper fitment 1 and the shaft 5 can be rendered integral by welding or by fastening a threaded portion on a head of the shaft 5 to a housing of an engine, or to a vehicle or other frame body by means of a nut.

In the mounting device thus constructed, when an engine body is vibrated, the rubber cylindrical body 3 undergoes a dynamic compressive flexure through the upper fitment 1, and the movable partition 4 is subjected to upper and lower compressive flexures through the shaft 5, whereby the upper sub-chamber 9a and the lower sub-chamber 9b change in volume.

Air is withdrawn from or admitted to the sub-chambers 9a, 9b in response to such volume variations, so that a suitable damping capacity is exhibited. To that end, an orifice 10 having a throttling function is apertured in an appropriate position of the movable partition 4 to put both the sub-chambers 9a, 9b in communication with each other.

It is theoretically established that the magnitude of damping capacity obtained by the throttling effect of air passing through the orifice 10 is proportional to the rates of volume change of the sub-chambers 9a, 9b corresponding to dynamic displacement and is inversely proportional to the volumes of the sub-chambers 9a, 9b.

In addition to the embodiment as illustrated where the sub-chambers 9a, 9b are put in communication with one another through the one orifice 10, other changes or variations may be made, for example, if only the admission or withdrawal of air is conducted by means of orifice(s) having a throttling function. For example, each orifice may be apertured at an appropriate plate to put each of the sub-chambers 9a, 9b in communication with the atmosphere, whereby when the movable partition 4 moves and the respective air sub-chambers are changed in volume, air is admitted to or released from them in response to the magnitude of the volume change.

In the vibration absorbing mounting device having such springing characteristics to vibrations and damping function, an elastic ring 8 of the movable partition 4 movably extending from the surrounding portion of the shaft 5 to the annular portion of the lower fitment 2 is shaped to assume only mirror symmetry relative to a plane passing through the shaft 5, which is a feature of this invention in marked distinction from prior art devices in which the elastic ring 8' of the movable partition 4' is formed to have 360° rotational symmetry relative to the shaft.

Stated another way, the elastic ring 8 is shaped of such a distorted ring that the portion 8a, which will be the upper or top portion, and portion 8b which will be the lower or bottom portion, of the elastic ring 8 are, when the vibration-proof mounting is mounted slantwise under the imposition of a definite load, deformed and profiled to be nearly horizontal and parallel to one another, whereas under no-load condition where an engine or other body to be supported is not attached, the angle of the portion 8a to the shaft is larger than that of the portion 8b to the shaft.

The distorted ring constituting the elastic ring 8 is further profiled so that the intermediate portion extending between the portion 8a and the portion 8b is, under no load condition, gradually, continuously changed in its angle to the shaft 5 between the obtuse angle of the top portion 8a and the acute angle of the bottom portion 8b.

By forming the elastic ring 8 distorted in this way, when the vibration-absorbing mounting is installed slantwise and supports an engine or like thereon, as shown in Fig. 3, the portion 8a and the bottom portion 8b of the elastic ring 8 are stretched or displaced in a flat fashion by the action of component forces of the perpendicular load of the engine both in the direction of the shaft 5 and in the direction normal to the shaft 5, thus being profiled to be nearly horizontal and parallel with one another.

As a consequence, there is no fear of causing buckling, particularly in the bottom portion 8b, at all and the flat stretched state is securely retained when oscillations are transmitted, so that breakage to which a buckled portion is susceptible can be prevented from occurring. Moreover, the elastic ring 8 is oscillated keeping its flat state, and as a result, predetermined values of volume change of the chamber, as designed, are reliably produced, so that the desired vibration absorption performed is exhibited.

The elastic ring 8 is not always required to be shaped in a flat and planar form, but may be shaped in a bellows or fluted form. Accordingly, the term "flat state" referred to above shall be interpreted in a broad sense to mean the state that the elastic ring is stretched or displaced in a generally flat fashion, there being no undesirably buckled portions.

In the illustrated embodiment, the lower fitment 2 has a convex portion 11 in its bottom plate area 2a facing the movable partition 4, the convex portion being raised on the side of the movable partition. The convex portion 11 is located in the area facing the elastic ring 8 and is profiled so that the portion on the side of the bottom portion 8b is raised the most and the portion on the side of the top portion 8a is not raised, the rise being gradually decreased from the former to the latter, thus forming a horseshoe-shaped projection on the bottom area having a decreasing depth from left to right as seen in Fig. 1.

The convex portion 11 preferably rises to near the level of the lower surface of the elastic ring 8 under loaded conditions, so long as it does not interfere with the elastic ring 8. This provides an advantage in that the volume of the lower sub-chamber 9b is reduced and the damping factor against vibrations in the low-frequency region is increased, and assists greatly in enhancing the function of the vibration-absorbing mounting device since the pressure of a compressive fluid acts uniformly upon any portions of the surface of the movable partition member 4.

As described above, according to this invention there is provided a vibration-absorbing mounting in which the elastic ring 8 of the movable partition 4 is formed by a ring which is distorted such that it assumes a flat profile under a load imposed in obliquely intersecting directions relative to the shaft 5. Accordingly, there is no problem of breakage due to buckling as is the case with prior art mountings in which partial buckling is caused and as a result, breakage occurs in the buckled portion after repeated oscillations, and, therefore, long life span is attainable.

Furthermore, since the movable partition 4 retains, under the supporting condition, a nearly flat stretched state in every region thereof whenever vibration occurs, volume changes of the upper sub-chamber 9a and the lower sub-chamber 9b are correctly achieved in response to the magnitudes of the vibrations, so that vibration absorption performance is exhibited accurately according to design conditions.

## Claims

1. A vibration absorbing mounting with fluid damping, said mounting comprising first and second mounting members (1, 2), a resiliently compressible body (3) extending between the first and second mounting members (1, 2) to form a fluid chamber (9) which is capable of changing volume, a shaft member (5) fluid tightly connected to the upper member and extending therefrom into the chamber (9) and generally axially of the chamber (9), a movable partition member (4) coupled to the first member (1) by means of the shaft member (5) and arranged laterally within the fluid chamber (9) to divide it into upper and lower sub-chambers (9a, 9b), fluid being expelled from or admitted to each sub-chamber (9a, 9b) on volume changes of the sub-chambers (9a, 9b) via an orifice (10) connecting the sub-chambers to each other or to the atmosphere, the movable partition member (4) comprising an elastic ring (8) extending between the shaft and an annular region (12) of the second mounting member (2), characterised in that the mounting is for use in a slanted orientation such that the support axis direction and the loading direction intersect, in that the elastic ring (8) is distorted such that a first portion (8a), which is an upper portion when the device is in use, and a second portion (8b), which is a lower portion when the device is in use, are deformed when mounted under a load, to be substantially horizontal and have substantially parallel profiles, in that the first portion (8a) defines an angle to the shaft (5) which is larger than the angle of the second portion (8b) in a no-load condition, and in that the angle of an intermediate portion of the ring (8) between the first and second portions (8a, 8b) varies gradually between the first and second portions.

2. A mounting as claimed in claim 1, characterised in that said lower fitment (2) has a convex portion (11) raised toward and facing the elastic ring (8), the height or depth of said convex portion (11) being a maximum on the side of the second portion (8b) of the elastic ring (8) and decreasing gradually to zero on the side of the first portion (8a) of the elastic ring (8), thus forming a horseshoe-shaped profile.

3. A mounting as claimed in claim 1 or 2, characterised in that said elastic ring (8) has at least in part a bellows or fluted form and retains said form on application of said load.

4. A mounting as claimed in any one of claims 1 to 3, characterised in that said resiliently compressible body (3) is a body of revolution and said chamber (9) is defined between said second fitment and a lower face of said body (3).

## Patentansprüche

1. Schwingungsdämpfendes Lager mit Flüssigkeitsdämpfung, mit ersten und zweiten Befestigungsteilen (1, 2), mit einem federnd zusammendrückbaren Körper (3), der sich zwischen dem ersten und zweiten Befestigungsteil (1, 2) erstreckt, so daß ein Flüssigkeitsraum (9) gebildet wird, dessen Volumen veränderbar ist, mit einem Schaftteil (5), der flüssigkeitsdicht mit dem oberen Befestigungsteil (1) verbunden ist und sich von diesem in den Flüssigkeitsraum (9) und im wesentlichen axial zum Flüssigkeitsraum (9) erstreckt, mit einem verschiebbaren Wandteil, das mit dem ersten Befestigungsteil (1) mittels des Schaftteiles (5) verbunden ist und seitlich innerhalb des Flüssigkeitsraumes (9) so angeordnet ist, daß dieser in einen oberen und einen unteren Sub-Flüssigkeitsraum (9a, 9b) unterteilt ist, wobei Flüssigkeit aus jedem der Teilraume (9a, 9b), bei Volumenänderungen der Sub-Flüssigkeitsräume (9a, 9b) über eine Verbindungsöffnung (10) verdrängt oder zugeführt wird, die die Teilräume untereinander oder mit der Atmosphäre verbinden, wobei der verschiebbare Wandteil (4) einen elastischen Ring (8) aufweist, der sich zwischen dem Schaftteil (5) und einem ringförmigen Bereich (12) des zweiten Befestigungsteiles (2) erstreckt, dadurch gekennzeichnet, daß das Lager im Gebrauch derart geneigt ausgerichtet ist, daß die Stützachsrichtung und die Belastungsrichtungen sich schneiden, daß der elastische Ring (8) so verdreht ist, daß ein erstes Teil (8a), welches ein oberes Teil bei Gebrauch der Vorrichtung ist, und ein zweites Teil (8b), welches das untere Teil bei Gebrauch der Vorrichtung ist, eingebaut unter Last im wesentlichen horizontal verformt sind und im wesentlichen parallele Profile aufweisen, daß das erste Teil (8a) einen Winkel mit dem Schaftteil (5) bildet, der größer ist als der Winkel des zweiten Teiles (8b) im nicht belasteten Zustand und daß der Winkel der Zwischenteiles des Ringes (8) zwischen den ersten und zweiten Teilen (8a, 8b) sich graduell zwischen den ersten und zweiten Teilen verändert.

2. Lager nach Anspruch 1, dadurch gekennzeichnet, daß das untere Befestigungsteil (2) einen konvexen Teil (11) aufweist, der sich zum elastischen Ring (8) erhebt und diesem zugewandt ist, daß die Höhe oder Tiefe des konvexen Teiles (11) ihr Maximum auf der Seite des zweiten Teiles (8b) des elastischen Ringes (8) aufweist und graduell gegen Null zur Seite des ersten Teiles (8a) des elatischen Ringes (8) abnimmt und so ein hufeisenförmiges Profil bildet.

3. Lager nach Anspruch 1 oder 2, dadurch gekennzeichnet, daß der elastische Ring (8) wenigstens teilweise eine Balg- oder gerillte Form aufweist und diese Form beim Aufbringen der Last beibehält.

4. Lager nach einem der Ansprüche 1 bis 3, dadurch gekennzeichnet, daß der federnd zusammendrückbare Körper (3) ein Rotationskörper ist und daß der Flüssigkeitsraum (9) begrenzt ist von dem zweiten Befestigungsteil und der unteren Fläche des Körpers (3).

**Revendications**

1. Support amortisseur de vibrations à amortissement par fluide, ledit support comprenant une première et une deuxième pièces de fixation (1, 2), un corps (3) élastiquement compressible s'étendant entre les première et deuxième pièces (1, 2) de manière à définir une chambre de fluide (9) qui peut changer de volume, une tige ou axe (5) relié de façon étanche au fluide à la pièce supérieure et s'étendant à partir de celle-ci à l'intérieur de la chambre (9) sensiblement dans l'axe de la chambre (9), un élément mobile de séparation (4) relié à la première pièce (1) par l'intermédiaire de l'axe (5) et disposé latéralement à l'intérieur de la chambre de fluide (9) de manière à la diviser en compartiments supérieur et inférieur (9a, 9b), le fluide étant chassé de chaque compartiment (9a, 9b) ou admis dans ceux-ci lors des variations de volume des compartiments (9a, 9b) par l'intermédiaire d'un orifice (10) reliant les compartiments l'un à l'autre ou à l'atmosphère, l'élément mobile de séparation (4) comprenant un anneau élastique (8) qui s'étend entre l'axe et une région annulaire (12) de la deuxième pièce de fixation (2), caractérisé en ce que le support est prévu pour l'utilisation en position inclinée telle que la direction axiale du support et la direction de la charge se coupent, en ce que l'anneau élastique (8) est déformé de sorte qu'une première partie (8a), qui est une partie supérieure pendant l'utilisation du dispositif, et une deuxième partie (8b), qui est une partie inférieure pendant l'utilisation du dispositif, sont déformées lorsque le support est placé sous une charge, de manière à être sensiblement horizontales et à avoir des profils sensiblement parallèles, en ce que la première partie (8a) définit avec l'axe (5) un angle qui est plus grand que l'angle de la deuxième partie (8b) en l'absence de charge, et en ce que l'angle d'une partie intermédiaire de l'anneau (8) entre les première et deuxième parties (8a, 8b) varie progressivement entre les première et deuxième parties.

2. Support suivant la revendication 1, caractérisé en ce que ladite pièce de fixation inférieure (2) comporte une partie convexe (11) surélevée vers l'anneau élastique (8) et en face de celui-ci, la hauteur ou profondeur de ladite partie convexe (11) étant maximale du côté de la deuxième partie (8b) de l'anneau élastique (8) et diminuant progressivement à zéro du côté de la première partie (8a) de l'anneau élastique (8), ce qui définit un profil en fer à cheval.

3. Support suivant la revendication 1 ou 2, caractérisé en ce que l'anneau élastique (8) a au moins en partie une configuration en soufflet ou gaufrée et conserve ladite configuration lors de l'application de ladite charge.

4. Support suivant l'une quelconque des revendications 1 à 3, caractérisé en ce que ledit corps (3) élastiquement compressible est un corps de révolution et ladite chambre (9) est définie entre ladite deuxième pièce de fixation et une face inférieure de ce corps (3).

FIG.1.

FIG.2.

FIG.3.

FIG.4.
Prior Art

FIG.5. Prior Art.